(19) Europäisches Patentamt / European Patent Office / Office européen des brevets

(11) **EP 3 916 709 B1**

(12) **EUROPEAN PATENT SPECIFICATION**

(45) Date of publication and mention
of the grant of the patent:
**18.10.2023 Bulletin 2023/42**

(21) Application number: **21151726.3**

(22) Date of filing: **15.01.2021**

(51) International Patent Classification (IPC):
**G09G 3/20** (2006.01)

(52) Cooperative Patent Classification (CPC):
**G09G 3/20;** G09G 2310/04; G09G 2320/103;
G09G 2330/021; G09G 2340/0435; G09G 2360/16

(54) **IMAGE PROCESSING METHOD AND DEVICE, ELECTRONIC DEVICE, AND STORAGE MEDIUM**

BILDVERARBEITUNGSVERFAHREN UND -VORRICHTUNG, ELEKTRONISCHE VORRICHTUNG
UND SPEICHERMEDIUM

PROCÉDÉ ET DISPOSITIF DE TRAITEMENT D'IMAGES, DISPOSITIF ÉLECTRONIQUE ET
SUPPORT D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2020 CN 202010452919**

(43) Date of publication of application:
**01.12.2021 Bulletin 2021/48**

(73) Proprietor: **Beijing Xiaomi Mobile Software Co.,
Ltd.
Beijing 100085 (CN)**

(72) Inventor: **ZHENG, Wenbai
Beijing, Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
CN-A- 109 005 457      CN-B- 109 005 457
US-A1- 2017 365 236      US-A1- 2018 108 311

## Description

### TECHNICAL FIELD

The present disclosure relates to an image updating technology for electronic devices, and more particularly, to an image processing method and device, an electronic device, and a storage medium.

### BACKGROUND

At present, for meeting a requirement of a user on a screen response, an electronic device supports a screen refresh rate of 60Hz and even 90Hz. For example, if the screen refresh rate is 60Hz, an operating system such as an Android® system requires each image frame to be drawn in about 16ms to ensure an experience in fluent image displaying of the electronic device. Although the screen refresh rate of 60Hz and even 90Hz has been supported at present, when a user starts multiple applications or starts a large application, the present screen refresh rate is still unlikely to meet a processing requirement of the user on an image displayed on a display screen.

Related technologies are known from US2018/108311A1, US2017/365236A1, and CN109005457A1.

### SUMMARY

The present disclosure provides an image processing method and device, an electronic device, and a storage medium.

The features of the image processing method and device, the electronic device, and the storage medium according to the present disclosure are defined in the independent claims, and the preferable features according to the present invention are defined in the dependent claims.

The technical solutions provided in the embodiments of the present disclosure may have the following beneficial effects.

In the embodiments of the present disclosure, the dirty region of the display region is determined, the image data of the dirty regions in the image frame to be updated for displaying and the presently displayed image frame is acquired, a similarity between the dirty regions in previous and next image frames is obtained by comparison through a similarity detection algorithm for the dirty regions of the image frame to be updated for displaying and the presently displayed image frame, and when it is determined that the similarity between the dirty regions in the previous and next image frames is less than the set threshold value, a Vsync effect on the display region is achieved in a manner of intercepting the image frame updating request, i.e., the Vsync signal, for a system to reduce influence brought to the power consumption by drawing of a graphics processing unit (GPU) and a central processing unit (CPU), such that the power consumption of the electronic device for refreshing of the display region is reduced to a certain extent, and the overall performance and battery life of the electronic device are improved.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

FIG. 1 is a first flow chart showing an image processing method, according to an embodiment of the present disclosure.
FIG. 2 is a second flow chart showing an image processing method, according to an embodiment of the present disclosure.
FIG. 3 is a third flow chart showing an image processing method, according to an embodiment of the present disclosure.
FIG. 4 is a composition structure diagram of a first image processing device, according to an embodiment of the present disclosure.
FIG. 5 is a composition structure diagram of a second image processing device, according to an embodiment of the present disclosure.
FIG. 6 is a block diagram of an electronic device, according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

An image processing method in embodiments of the present disclosure is applied to an electronic device installed with an Android® operating system, particularly an electronic device such as a mobile phone, an intelligent terminal, and a gaming console, and is mainly for optimization processing for frame refreshing of the electronic device.

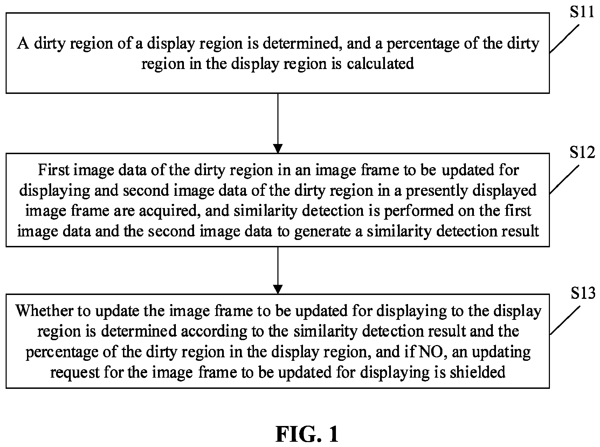

FIG. 1 is a first flow chart showing an image processing method, according to an embodiment of the present disclosure. As illustrated in FIG. 1, the image processing method in the embodiment of the present disclosure includes the following operations.

At S11, a dirty region of a display region is determined, and a percentage of the dirty region in the display region is calculated.

The image processing method in the embodiment of the present disclosure is applied to an electronic device. The electronic device may be a mobile phone, a gaming console, a wearable device, a virtual reality device, a personal digital assistant, a notebook computer, a tablet computer, a television terminal, or the like.

Dirty region redrawing refers to redrawing of a changed region only, rather than full-screen refreshing when a graphical interface is drawn in each frame. Therefore, in the embodiment of the present disclosure, before a response is given to image frame updating of an operating system, the dirty region of the display region is determined and the percentage of the dirty region in the display region is calculated.

At S12, first image data of the dirty region in an image frame to be updated for displaying and second image data of the dirty region in a presently displayed image frame are acquired, and similarity detection is performed on the first image data and the second image data to generate a similarity detection result.

In the embodiment of the present disclosure, after the dirty region is determined, the first image data of the dirty region in the image frame to be updated for displaying is not combined and displayed to the display region. Instead, it is necessary to compare the image data of the dirty region in the image frame to be updated for displaying with the image data of the dirty region in the presently displayed image frame and determine whether a difference therebetween exceeds a set threshold value. When the difference between the image data of the dirty regions in the image frame to be updated for displaying and the presently displayed image frame exceeds the set threshold value, the image data of the dirty region in the image frame to be updated for displaying is updated to the display region and displayed through a screen. When the difference between the image data of the dirty regions in the image frame to be updated for displaying and the presently displayed image frame does not exceed the set threshold value, an updating request for the image frame to be updated for displaying is shielded, and the image data of the dirty region in the image frame to be updated for displaying is not updated to the display region.

In the embodiment of the present disclosure, for improving the efficiency of comparison for a similarity between the image data of the dirty regions in the two image frames, before the image data is compared, the image data of the dirty regions needs to be processed.

As an implementation means, compression is performed to change resolutions of the image data of the dirty regions in the image frame to be updated for displaying and the presently displayed image frame to a set resolution. For example, the image data of each of the dirty regions may be compressed to a small image of $9 \times 8$ (numbers of columns of pixels by number of rows of pixels), thereby reducing image detail information. Of course, the image data of the dirty region may also be compressed to a small image with another resolution as required, and the resolution may specifically be set according to a practical requirement of the operating system to be, for example, $18 \times 17$, $20 \times 17$, $35 \times 33$, $48 \times 33$, and the like. If the image is reduced more, the processing speed for similarity comparison of the images is higher, and the accuracy of the similarity is correspondingly reduced to a certain extent.

As an implementation means, color red green blue (RGB) values of the image data of the dirty regions in the image frame to be updated for displaying and the presently displayed image frame with the set resolution are converted to gray values for gray image displaying. Converting the color RGB value of the reduced image to a gray represented by an integer from 0 to 255 simplifies three-dimensional comparison to one-dimensional comparison, such that the efficiency of comparison for the similarity between the image data of the dirty regions in the embodiments of the present disclosure is improved.

In the embodiments of the present disclosure, the operation in which similarity detection is performed on the first image data and the second image data to generate the similarity detection result includes operations as follows. Color intensity differences between adjacent pixels in the first image data are determined, binary values are assigned to the color intensity differences, the assigned binary values of continuous color intensity differences form a first binary character string, and a first hash value of the first binary character string is determined. Color intensity differences between adjacent pixels in the second image data are determined, binary values are assigned to the color intensity differences, the assigned binary values of continuous color intensity differences form a second binary character string, and a second hash value of the second binary character string is determined. A Hamming distance between the first hash value and the second hash value is calculated, and the calculated Hamming distance between the first hash value and the second hash value is a Hamming distance between the images of the dirty regions in the image frame to be updated for displaying and the presently displayed image frame. The calculated Hamming distance is determined as a similarity value of the first image data and the second image data to obtain the similarity detection result.

In the embodiments of the present disclosure, similarity detection may be performed on the first image data and the second image data by use of a perceptual Hash (pHash) algorithm. The pHash is a general term of a type of algorithms, including average Hash (aHash), pHash, difference Hash (dHash), and the like. pHash calculates a hash value in a more relative manner rather than calculating the specific hash value in a strict manner, and this is because being similar or not is a relative judgment. A principle thereof is to generate a fingerprint character string for each image, i.e., a set of binary digits obtained by operating the image according to a certain hash algorithm, and then compare Hamming distances between different image fingerprints. The closer the results, the more similarity that exists between the images. The Hamming distance is as follows: if a first set of binary data is 101 and a second set is 111, the second digit 0 of the first set may be changed to 1 so as to obtain the second set of data 111, and in such case, a Hamming distance between the two sets of data is 1. In short, the Hamming distance is the number of steps required to change a set of binary data to another set of data. It is apparent that a difference between two images may be measured through the numerical value. The smaller the Hamming distance, the more similarity that exists. If the Hamming distance is 0, the two images are completely the same.

The aHash algorithm is relatively high in calculation speed but relatively poor in accuracy. The pHash algorithm is relatively high in calculation accuracy but relatively low in operation speed. The dHash algorithm is relatively high in accuracy and also high in speed. Therefore, in the embodiments of the present disclosure, the dHash algorithm is preferred to perform similarity detection on the first image data and the second image data to determine the similarity value of the dirty regions in the two image frames.

The operation in which the first hash value of the first binary character string is determined includes: high-base conversion being performed on the first binary character string to form converted first high-base characters, and the first high-base characters being sequenced to form a character string to form a first difference hash value; and high-base conversion being performed on the second binary character string to form converted second high-base characters, and the second high-base characters being sequenced to form a character string to form a second difference hash value.

The dHash algorithm is implemented based on a morphing algorithm, and is specifically implemented as follows: (1) the image is compressed to a $9 \times 8$ small image with 72 pixels; (2) the image is converted to a gray image; (3) the differences are calculated: the differences between the adjacent pixels of the image frame are determined at first through the dHash algorithm; if the left pixel is brighter than the right one, 1 is recorded; otherwise, 0 is recorded; in such a manner, eight different differences are generated between nine pixels in each row, and there are a total of eight rows, so 64 differences or a 32-bit 01 character string is generated; and (4) the Hamming distance between the image frames is calculated through the hash values based on the difference between character strings, and the Hamming distance is determined as the similarity value between the two image frames.

In comparative examples not part of the claimed invention, the similarity between the two image frames may also be calculated in a histogram manner. In the histogram manner, the image similarity is measured based on a simple vector similarity, and is usually measured by use of a color feature, and this manner is suitable for describing an image difficult to automatically segment. However, a probability distribution of image gray values is mainly reflected, no spatial position information of the image is provided, and a large amount of information is lost, such that the misjudgment rate is high. However, as an implementation means, the similarity between the two image frames may also be calculated in the histogram manner.

At S13, whether to update the image frame to be updated for displaying to the display region is determined according to the similarity detection result and the percentage of the dirty region in the display region, and if NO, an updating request for the image frame to be updated for displaying is shielded.

In the embodiments of the present disclosure, a first weight value is set for the percentage of the dirty region in the display region, and a second weight value is set for the similarity value.

A first product value of the first weight value and the percentage of the dirty region in the display region is calculated, and a second product value of the second weight value and the similarity value is calculated. A sum value of the first product value and the second product value is calculated. The sum value is compared with a set threshold value. When the sum value is greater than or equal to the set threshold value, it is determined that the image frame to be updated for displaying is updated to the display region. Correspondingly, when the sum value is less than the set threshold value, it is determined that the image frame to be updated for displaying is not updated to the display region.

In the embodiments of the present disclosure, the operation in which the updating request for the image frame to be updated for displaying is shielded includes: when a dynamic adjustment vertical sync (Vsync) signal of the display region is received, the Vsync signal is intercepted, such that a SurfaceFlinger does not compose a content of the image frame to be updated for displaying. For example, for a Vsync signal of an Android® system, the Vsync signal in the Android® system may be divided into two types: one is a hardware Vsync signal generated by the screen, and the other is a software Vsync signal generated by the SurfaceFlinger. The first type of Vsync signal (the hardware Vsync signal) is essentially a pulse signal, which is generated by a hardware composer (HWC) module according to a screen refresh rate and is configured to trigger or switch some operations. The second type of Vsync signal (the software Vsync signal) is transmitted to a Choreographer through a Binder. Therefore, a Vsync signal may be sent to notify the operating system to prepare for refreshing before every refresh of the screen of the electronic device, and then the system calls a central processing unit (CPU) and a graphics processing unit (GPU) for user interface (UI) updating.

According to the embodiments of the present disclosure, when it is determined that the similarity between the dirty regions in the previous and next image frames is less than the set threshold value, a Vsync effect on the display region is achieved by intercepting the image frame updating request, i.e., the Vsync signal, for the system, so as to reduce influence brought to the power consumption by drawing of the GPU and the CPU, such that the power consumption of the electronic device for refreshing of the display region is reduced to a certain extent, and the overall performance and battery life of the electronic device are improved.

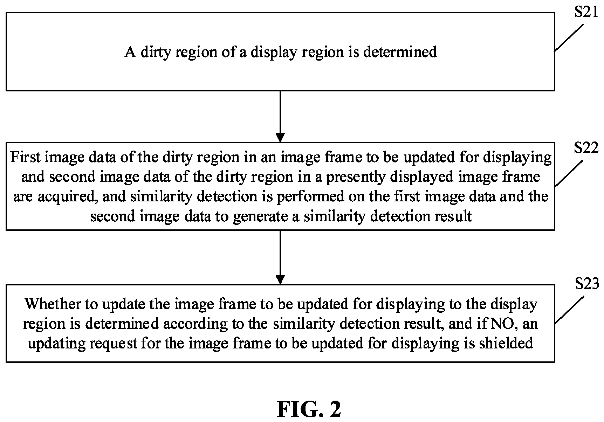

FIG. 2 is a second flow chart showing an image processing method, according to an embodiment of the present disclosure. As illustrated in FIG. 2, the image processing method in the embodiment of the present disclosure includes the following operations.

At S21, a dirty region of a display region is determined.

The image processing method in the embodiment of the present disclosure is applied to an electronic device. The electronic device may be a mobile phone, a gaming console, a wearable device, a virtual reality device, a personal digital assistant, a notebook computer, a tablet computer, a television terminal, or the like.

Dirty region redrawing refers to redrawing of a changed region only, rather than full-screen refreshing when a graphical interface is drawn in each frame. Therefore, in the embodiment of the present disclosure, before a response is given to image frame updating of an operating system, the dirty region of the display region is determined.

At S22, first image data of the dirty region in an image frame to be updated for displaying and second image data of the dirty region in a presently displayed image frame are acquired, and similarity detection is performed on the first image data and the second image data to generate a similarity detection result.

In the embodiment of the present disclosure, after the dirty region is determined, the first image data of the dirty region in the image frame to be updated for displaying is not combined and displayed to the display region. Instead, it is necessary to compare the image data of the dirty region in the image frame to be updated for displaying with the image data of the dirty region in the presently displayed image frame and determine whether a difference therebetween exceeds a set threshold value. When the difference between the image data of the dirty regions in the image frame to be updated for displaying and the presently displayed image frame exceeds the set threshold value, the image data of the dirty region in the image frame to be updated for displaying is updated to the display region and displayed through a screen. When the difference between the image data of the dirty regions in the image frame to be updated for displaying and the presently displayed image frame does not exceed the set threshold value, an updating request for the image frame to be updated for displaying is shielded, and the image data of the dirty region in the image frame to be updated for displaying is not updated to the display region.

In the embodiment of the present disclosure, for improving the efficiency of comparison for a similarity between the image data of the dirty regions in the two image frames, before the image data is compared, the image data of the dirty regions needs to be processed.

As an implementation means, compression is performed to change resolutions of the image data of the dirty regions in the image frame to be updated for displaying and the presently displayed image frame to a set resolution. For example, the image data of each of the dirty regions may be compressed to a small image of $9 \times 8$, thereby reducing image detail information. Of course, the image data of the dirty region may also be compressed to a small image with another resolution as required, and the resolution may specifically be set according to a practical requirement of the operating system to be, for example, $18 \times 17$, $20 \times 17$, $35 \times 33$, $48 \times 33$, and the like. If the image is reduced more, the processing speed for similarity comparison of the images is higher, and the accuracy of the similarity is correspondingly reduced to a certain extent.

As an implementation means, color RGB values of the image data of the dirty regions in the image frame to be updated for displaying and the presently displayed image frame with the set resolution are converted to gray values for gray image displaying. Converting the color RGB value of the reduced image to a gray represented by an integer from 0 to 255 simplifies three-dimensional comparison to one-dimensional comparison, such that the efficiency of comparison for the similarity between the image data of the dirty regions in the embodiments of the present disclosure is improved.

In the embodiments of the present disclosure, the operation in which similarity detection is performed on the first image data and the second image data to generate the similarity detection result includes operations as follows. Color intensity differences between adjacent pixels in the first image data are determined, binary values are assigned to the color intensity differences, the assigned binary values of continuous color intensity differences form a first binary character string, and a first hash value of the first binary character string is determined. Color intensity differences between adjacent pixels in the second image data are determined, binary values are assigned to the color intensity differences, the assigned binary values of continuous color intensity differences form a second binary character string, and a second hash value of the second binary character string is determined. A Hamming distance between the first hash value and the second hash value is calculated, and the calculated Hamming distance between the first hash value and the second hash value is a Hamming distance between the images of the dirty regions in the image frame to be updated for displaying and the presently displayed image frame. The calculated Hamming distance is determined as a similarity value of the first image data and the second image data to obtain the similarity detection result.

In the embodiments of the present disclosure, similarity detection may be performed on the first image data and the second image data by use of a pHash algorithm. The pHash is a general term of a type of algorithms, including average Hash (aHash), pHash, difference Hash (dHash), and the like. pHash calculates a hash value in a more relative manner rather than calculating the specific hash value in a strict manner, and this is because being similar or not is a relative judgment. A principle thereof is to generate a fingerprint character string for each image, i.e., a set of binary digits obtained by operating the image according to a certain hash algorithm, and then compare Hamming distances between different image fingerprints. The closer the results, the more similarity that exists between the images. The Hamming distance is as follows: if a first set of binary data is 101 and a second set is 111, the second digit 0 of the first set may be changed to 1 so as to obtain the second set of data 111, and in such case, a Hamming distance between the two sets of data is 1. In short, the Hamming distance is the number of steps required to change a set of binary data to another set of data. It is apparent that a difference between two images may be measured through the numerical value. The smaller the Hamming distance, the more similarity that exists. If the Hamming distance is 0, the two images are completely the same.

The aHash algorithm is relatively high in calculation speed but relatively poor in accuracy. The pHash algorithm is relatively high in calculation accuracy but relatively low in operation speed. The dHash algorithm is relatively high in accuracy and also high in speed. Therefore, in the embodiments of the present disclosure, the dHash algorithm is preferred to perform similarity detection on the first image data and the second image data to determine the similarity value of the dirty regions in the two image frames.

The operation in which the first hash value of the first binary character string is determined includes: high-base conversion being performed on the first binary character string to form converted first high-base characters, and the first high-base characters being sequenced to form a character string to form a first difference hash value; and high-base conversion being performed on the second binary character string to form converted second high-base characters, and the second high-base characters being sequenced to form a character string to form a second difference hash value.

The dHash algorithm is implemented based on a morphing algorithm, and is specifically implemented as follows: (1) the image is compressed to a 9×8 small image with 72 pixels; (2) the image is converted to a gray image; (3) the differences are calculated: the differences between the adjacent pixels of the image frame are determined at first through the dHash algorithm; if the left pixel is brighter than the right one, 1 is recorded; otherwise, 0 is recorded; in such a manner, eight different differences are generated between nine pixels in each row, and there are a total of eight rows, so 64 differences or a 32-bit 01 character string is generated; and (4) the Hamming distance between the image frames is calculated through the hash values based on the difference between character strings, and the Hamming distance is determined as the similarity value between the two image frames.

In comparative examples not part of the claimed invention, the similarity between the two image frames may also be calculated in a histogram manner. In the histogram manner, the image similarity is measured based on a simple vector similarity, and is usually measured by use of a color feature, and this manner is suitable for describing an image difficult to automatically segment. However, a probability distribution of image gray values is mainly reflected, no spatial position information of the image is provided, and a large amount of information is lost, such that the misjudgment rate is high. However, as an implementation means, the similarity between the two image frames may also be calculated in the histogram manner.

At S23, whether to update the image frame to be updated for displaying to the display region is determined according to the similarity detection result, and if NO, an updating request for the image frame to be updated for displaying is shielded.

In the embodiments of the present disclosure, the similarity value is compared with a set threshold value; when the similarity value is greater than or equal to the set threshold value, it is determined that the image frame to be updated for displaying is updated to the display region. Correspondingly, when the similarity value is less than the set threshold value, it is determined that the image frame to be updated for displaying is not updated to the display region.

In the embodiments of the present disclosure, the operation in which the updating request for the image frame to be updated for displaying is shielded includes: when a dynamic adjustment Vsync signal of the display region is received, the Vsync signal is intercepted, such that a SurfaceFlinger does not compose a content of the image frame to be updated for displaying. For example, for a Vsync signal of an Android® system, the Vsync signal in the Android® system may be divided into two types: one is a hardware Vsync signal generated by the screen, and the other is a software Vsync signal generated by the SurfaceFlinger. The first type of Vsync signal (the hardware Vsync signal) is essentially a pulse signal, which is generated by an HWC module according to a screen refresh rate and is configured to trigger or switch some operations. The second type of Vsync signal (the software Vsync signal) is transmitted to a Choreographer through a Binder. Therefore, a Vsync signal may be sent to notify the operating system to prepare for refreshing before every refresh of the screen of the electronic device, and then the system calls a CPU and a GPU for UI updating.

According to the embodiments of the present disclosure, when it is determined that the similarity between the dirty regions in the previous and next image frames is less than the set threshold value, a Vsync effect on the display region is achieved by intercepting the image frame updating request, i.e., the Vsync signal, for the system, so as to reduce influence brought to the power consumption by drawing of the GPU and the CPU, such that the power consumption of the electronic device for refreshing of the display region is reduced to a certain extent, and the overall performance and battery life of the electronic device are improved.

The essence of the technical solution of the embodiments of the present disclosure will further be elaborated below in combination with a specific example.

In an Android® system, during a process of displaying an image on a screen, it is necessary to redraw different display regions, and a specific redrawn and refreshed part is called a dirty region, i.e., a dirty visible region, namely a region to be refreshed. In the embodiments of the present disclosure, the dirty region to be refreshed in the display process is utilized, and a percentage of the dirty region in the whole display region is calculated. Meanwhile, similarity detection is performed on the dirty region by use of the dHash algorithm, and a new detection model for a similarity between two frames is constructed based on the two values (i.e., the percentage value and the similarity value). Compared with performing similarity detection on the whole display region, this manner has the advantage that the processing speed is increased. Or, difference hash values of the dirty regions in two image frames are directly utilized, a similarity value between image data of the dirty regions in the two image frames is determined, and whether to perform composition processing on next frame layer data through a SurfaceFlinger is determined based on the similarity value.

The dirty region to be refreshed in the display process is utilized, and the percentage p of the dirty region in the whole display region is calculated. Meanwhile, similarity detection is performed on the dirty region by use of the dHash algorithm to obtain the similarity s, and the new detection model for the similarity between the two frames is constructed based on the two values (i.e., the percentage value and the similarity value). The similarity value obtained based on the detection model may be applied to a layer composition strategy of the Surface-Flinger to control transmission of the Vsync signal, thereby achieving a purpose of dynamic Vsync, which is to reduce the influence brought to the performance by redrawing of the GPU and the CPU.

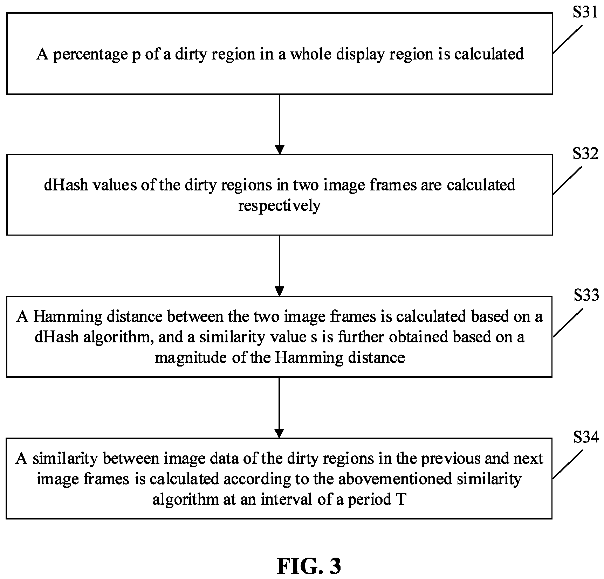

FIG. 3 is a third flow chart showing an image processing method, according to an embodiment of the present disclosure. As illustrated in FIG. 3, the image processing method in the embodiment of the present disclosure mainly includes the following processing operations.

At S31, a dirty region of a display region of an electronic device is acquired, and a percentage p of the dirty region in the whole display region is calculated.

At S32, dHash values of the dirty regions in two image frames are calculated respectively.

1) Images are reduced at first: the dirty regions are compressed to 9×8 small images. The images are compressed to reduce image detail information.

2) Gray processing is performed: color RGB values of the reduced images are converted to grays represented by integers from 0 to 255 to simplify three-dimensional comparison to one-dimensional comparison.

3) Differences are calculated: color intensity differences between adjacent pixels in each image subjected to gray processing are calculated. In each image, the differences between the adjacent pixels are calculated by taking each row as a unit. Since there are nine pixels in each row of the reduced image, eight differences may be generated, and the image may be converted to be hexadecimal. If a color intensity of a first pixel is greater than a color intensity of a second pixel, a difference is set to be True (i.e., 1), and if it is not greater than the second pixel, the difference is set to be False (i.e., 0).

4) Conversion to hash values is performed: each value in a difference array is considered as a bit, every eight bits form a hexadecimal value, and thus eight hexadecimal values are obtained. The hexadecimal values are connected and converted to a character string to obtain the final dHash value.

At S33, a Hamming distance between the two image frames is calculated based on a dHash algorithm, and a similarity value s is further obtained based on a magnitude of the Hamming distance. Herein, the two image frames refer to an image frame to be updated for displaying and a presently displayed image frame respectively.

1) The two dHash values are converted to binary differences, an exclusive or (xor) operation is executed, and the bit number of xor results "1", i.e., the number of bits representing differences, is calculated to obtain the Hamming distance.

2) The similarity s is obtained by comparison according to the Hamming distance of the dirty regions in the two frames.

3) A calculation formula of a model for a similarity between two frames is established according to the calculated percentage p of the dirty region and the similarity s, i.e.:

$$Similarity(p, s) = \alpha * p + \beta * s \quad (1).$$

In the formula (1), p represents the percentage of the dirty region in the whole display region, s represents the similarity between the dirty regions in the previous and next frames, α is a weight parameter of p, β is a weight parameter of s, and α+β=1. Values of α and β may be regulated as required.

At S34, a similarity Similarity(p, s) between image data of the dirty regions in the previous and next image frames is calculated according to the similarity algorithm introduced above at an interval of a period T. A similarity threshold value £ is set, and magnitudes of the similarity Similarity(p, s) and the threshold value £ are compared. When Similarity(p, s) is less than or equal to £, the similarity between the previous and next image frames is relatively low, namely the previous and next image frames are greatly different, such that a Vsync signal is not processed and is normally distributed and transmitted to a SurfaceFlinger for normal layer composition and updating. When Similarity(p, s) is more than £, the similarity between the previous and next image frames is relatively high, and in such case, the system intercepts the Vsync signal for updating to trigger a mechanism disabling the SurfaceFlinger to update the next frame, thereby achieving the purpose of reducing the power consumption during running of a GPU and a CPU to reduce the influence brought to the power consumption by UI redrawing during running of the electronic device and further improve the overall performance of the electronic device.

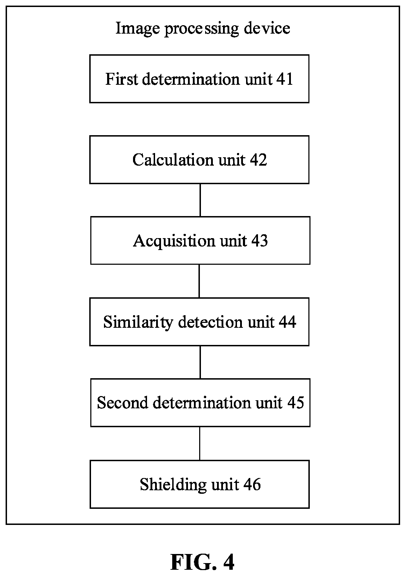

FIG. 4 is a composition structure diagram of a first image processing device, according to an embodiment of the present disclosure. As illustrated in FIG. 4, the first image processing device in the embodiment of the present disclosure includes: a first determination unit 41, a calculation unit 42, an acquisition unit 43, a similarity detection unit 44, a second determination unit 45, and a shielding unit 46.

The first determination unit 41 is configured to determine a dirty region of a display region.

The calculation unit 42 is configured to calculate a percentage of the dirty region in the display region.

The acquisition unit 43 is configured to acquire first image data of the dirty region in an image frame to be updated for displaying and second image data of the dirty region in a presently displayed image frame.

The similarity detection unit 44 is configured to perform similarity detection on the first image data and the second image data to generate a similarity detection result.

The second determination unit 45 is configured to determine whether to update the image frame to be updated for displaying to the display region according to the similarity detection result and the percentage of the dirty region in the display region and, if NO, trigger a shielding unit.

The shielding unit 46 is configured to shield an updating request for the image frame to be updated for displaying.

The similarity detection unit 44 includes: a first determination subunit, an assignment subunit, a second determination subunit, a first calculation subunit, and a similarity detection subunit.

The first determination subunit (not illustrated in FIG. 4) is configured to determine color intensity differences between adjacent pixels in the first image data and color intensity differences between adjacent pixels in the second image data.

The assignment subunit (not illustrated in FIG. 4) is configured to assign binary values to the color intensity differences of the first image data, the assigned binary values of continuous color intensity differences forming a first binary character string, and assign binary values to the color intensity differences of the second image data, the assigned binary values of continuous color intensity differences forming a second binary character string.

The second determination subunit (not illustrated in FIG. 4) is configured to determine a first hash value of the first binary character string and a second hash value of the second binary character string.

The first calculation subunit (not illustrated in FIG. 4) is configured to calculate a Hamming distance between the first hash value and the second hash value, the calculated Hamming distance between the first hash value and the second hash value being a Hamming distance between images of the dirty regions in the image frame to be updated for displaying and the presently displayed image frame.

The similarity detection subunit (not illustrated in FIG. 4) is configured to determine the calculated Hamming distance as a similarity value of the first image data and the second image data to obtain the similarity detection result.

Optionally, the second determination subunit is further configured to: perform high-base conversion on the first binary character string to form converted first high-base characters and sequence the first high-base characters to form a character string to form a first difference hash value; and perform high-base conversion on the second binary character string to form converted second high-base characters and sequence the second high-base characters to form a character string to form a second difference hash value.

Optionally, the first image processing device further includes: a compression unit and a conversion unit.

The compression unit (not illustrated in FIG. 4) is configured to perform compression to change resolutions of the first image data and the second image data to a set resolution.

The conversion unit (not illustrated in FIG. 4) is configured to convert color RGB values of the first image data and the second image data with the set resolution to gray values for gray image displaying.

The first image processing device further includes: a setting unit (not illustrated in FIG. 4), configured to set a first weight value for the percentage of the dirty region in the display region, and set a second weight value for the similarity value.

The second determination unit 45 includes: a second calculation subunit, a third calculation subunit, a comparison subunit, and a third determination subunit.

The second calculation subunit (not illustrated in FIG. 4) is configured to calculate a first product value of the first weight value and the percentage of the dirty region in the display region, and calculate a second product value of the second weight value and the similarity value.

The third calculation subunit (not illustrated in FIG. 4) is configured to calculate a sum value of the first product value and the second product value.

The comparison subunit (not illustrated in FIG. 4) is configured to compare the sum value with a set threshold value.

The third determination subunit (not illustrated in FIG. 4) is configured to, when the sum value is greater than or equal to the set threshold value, determine to update the image frame to be updated for displaying to the display region, and correspondingly, when the sum value is less than the set threshold value, determine not to update the image frame to be updated for displaying to the display region.

The shielding unit 46 includes: a receiving subunit and an interception subunit.

The receiving subunit (not illustrated in FIG. 4) is configured to receive a dynamic adjustment Vsync signal of the display region.

The interception subunit (not illustrated in FIG. 4) is configured to intercept the Vsync signal to cause a SurfaceFlinger not to compose a content of the image frame to be updated for displaying.

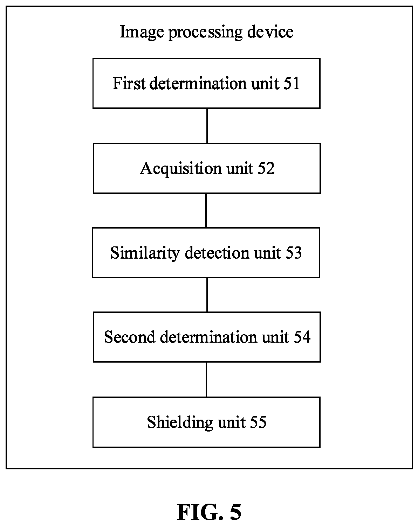

FIG. 5 is a composition structure diagram of a second image processing device, according to an embodiment of the present disclosure. As illustrated in FIG. 5, the second image processing device in the embodiment of the present disclosure includes: a first determination unit 51, an acquisition unit 52, a similarity detection unit 53, a second determination unit 54, and a shielding unit 55.

The first determination unit 51 is configured to determine a dirty region of a display region.

The acquisition unit 52 is configured to acquire first image data of the dirty region in an image frame to be updated for displaying and second image data of the dirty region in a presently displayed image frame.

The similarity detection unit 53 is configured to perform similarity detection on the first image data and the second image data to generate a similarity detection result.

The second determination unit 54 is configured to determine whether to update the image frame to be updated for displaying to the display region according to the similarity detection result and, if NO, trigger a shielding unit.

The shielding unit 55 is configured to shield an updating request for the image frame to be updated for displaying.

The similarity detection unit 53 includes: a first determination subunit, an assignment subunit, a second determination subunit, a first calculation subunit, and a similarity detection subunit.

The first determination subunit (not illustrated in FIG. 5) is configured to determine color intensity differences between adjacent pixels in the first image data and color intensity differences between adjacent pixels in the second image data.

The assignment subunit (not illustrated in FIG. 5) is configured to assign binary values to the color intensity differences of the first image data, the assigned binary values of continuous color intensity differences forming a first binary character string, and assign binary values to the color intensity differences of the second image data, the assigned binary values of continuous color intensity differences forming a second binary character string.

The second determination subunit (not illustrated in FIG. 5) is configured to determine a first hash value of the first binary character string and a second hash value of the second binary character string.

The first calculation subunit (not illustrated in FIG. 5) is configured to calculate a Hamming distance between the first hash value and the second hash value, the calculated Hamming distance between the first hash value and the second hash value being a Hamming distance between images of the dirty regions in the image frame to be updated for displaying and the presently displayed image frame.

The similarity detection subunit (not illustrated in FIG. 5) is configured to determine the calculated Hamming distance as a similarity value of the first image data and the second image data to obtain the similarity detection result.

Optionally, the second determination subunit is further configured to: perform high-base conversion on the first binary character string to form converted first high-base characters and sequence the first high-base characters to form a character string to form a first difference hash value; and perform high-base conversion on the second binary character string to form converted second high-base characters and sequence the second high-base characters to form a character string to form a second difference hash value.

Optionally, the second image processing device further includes: a compression unit and a conversion unit.

The compression unit (not illustrated in FIG. 5) is configured to perform compression to change resolutions of the first image data and the second image data to a set resolution.

The conversion unit (not illustrated in FIG. 5) is configured to convert color RGB values of the first image data and the second image data with the set resolution to gray values for gray image displaying.

The second determination unit 54 includes: a comparison subunit and a third determination subunit.

The comparison subunit (not illustrated in FIG. 5) is configured to compare the similarity value with a set threshold value.

The third determination subunit (not illustrated in FIG. 5) is configured to, when the similarity value is greater than or equal to the set threshold value, determine to update the image frame to be updated for displaying to the display region, and correspondingly, when the similarity value is less than the set threshold value, determine not to update the image frame to be updated for displaying to the display region.

The shielding unit 55 includes: a receiving subunit and an interception subunit.

The receiving subunit (not illustrated in FIG. 5) is configured to receive a dynamic adjustment Vsync signal of the display region.

The interception subunit (not illustrated in FIG. 5) is configured to intercept the Vsync signal to cause a SurfaceFlinger not to compose a content of the image frame to be updated for displaying.

With respect to the device in the above embodiments, the specific manners for performing operations for individual modules therein have been described in detail in the embodiments regarding the method, which will not be repeated herein.

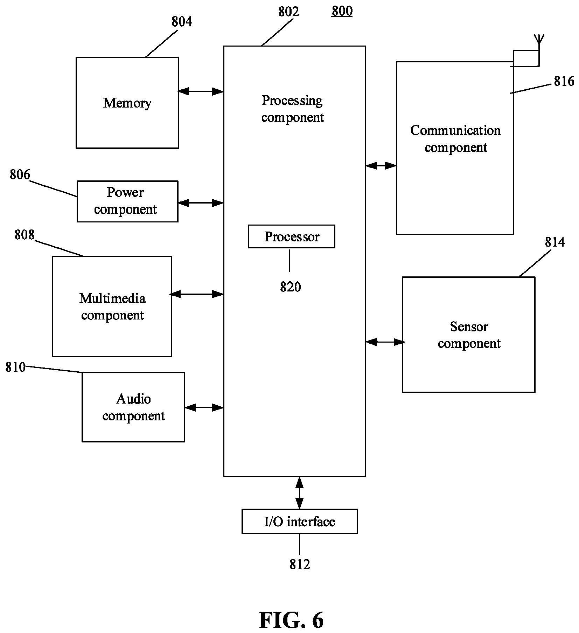

FIG. 6 is a block diagram of an electronic device 800, according to an embodiment of the present disclosure. As illustrated in FIG. 6, the electronic device 800 supports multi-screen output. The electronic device 800 may include one or more of the following components: a processing component 802, a memory 804, a power component 806, a multimedia component 808, an audio component 810, an input/output (I/O) interface 812, a sensor component 814, or a communication component 816.

The processing component 802 typically controls overall operations of the electronic device 800, such as the operations associated with display, telephone calls, data communications, camera operations, and recording operations. The processing component 802 may include one or more processors 820 to execute instructions to perform all or part of the acts in the abovementioned method. Moreover, the processing component 802 may include one or more modules which facilitate interaction between the processing component 802 and other components. For instance, the processing component 802 may include a multimedia module to facilitate interaction between the multimedia component 808 and the processing component 802.

The memory 804 is configured to store various types of data to support the operation of the electronic device 800. Examples of such data include instructions for any applications or methods operated on the electronic device 800, contact data, phonebook data, messages, pictures, video, etc. The memory 804 may be implemented by any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, and a magnetic or optical disk.

The power component 806 provides power for various components of the electronic device 800. The power component 806 may include a power management system, one or more power supplies, and other components associated with generation, management, and distribution of power for the electronic device 800.

The multimedia component 808 includes a screen providing an output interface between the electronic device 800 and a user. In some embodiments, the screen may include a liquid crystal display (LCD) and a touch panel (TP). If the screen includes the TP, the screen may be implemented as a touch screen to receive an input signal from the user. The TP includes one or more touch sensors to sense touches, swipes, and gestures on the TP. The touch sensors may not only sense a boundary of a touch or swipe action, but also detect a period of time and a pressure associated with the touch or swipe action. In some embodiments, the multimedia component 808 includes a front camera and/or a rear camera. The front camera and/or the rear camera may receive external multimedia data when the electronic device 800 is in an operation mode, such as a photographing mode or a video mode. Each of the front camera and the rear camera may be a fixed optical lens system or have focusing and optical zooming capabilities.

The audio component 810 is configured to output and/or input an audio signal. For example, the audio component 810 includes a microphone (MIC), and the MIC is configured to receive an external audio signal when the electronic device 800 is in an operation mode, such as a call mode, a recording mode, and a voice recognition mode. The received audio signal may further be stored in the memory 804 or sent through the communication component 816. In some embodiments, the audio component 810 further includes a speaker configured to output the audio signal.

The I/O interface 812 provides an interface between the processing component 802 and peripheral interface modules, such as a keyboard, a click wheel, buttons, and the like. The buttons may include, but are not limited to: a home button, a volume button, a starting button, and a locking button.

The sensor component 814 includes one or more sensors configured to provide status assessments in various aspects for the electronic device 800. For instance, the sensor component 814 may detect an on/off status of the electronic device 800 and relative positioning of components, such as a display and small keyboard of the electronic device 800, and the sensor component 814 may further detect a change in a position of the electronic device 800 or a component of the electronic device 800, presence or absence of contact between the user and the electronic device 800, orientation or acceleration/deceleration of the electronic device 800, and a change in temperature of the electronic device 800. The sensor component 814 may include a proximity sensor configured to detect presence of an object nearby without any physical contact. The sensor component 814 may also include a light sensor, such as a complementary metal oxide semiconductor (CMOS) or charge coupled device (CCD) image sensor, configured for use in an imaging application (APP). In some embodiments, the sensor component 814 may also include an acceleration sensor, a gyroscope sensor, a magnetic sensor, a pressure sensor, or a temperature sensor.

The communication component 816 is configured to facilitate wired or wireless communication between the electronic device 800 and other devices. The electronic device 800 may access a communication-standard-based wireless network, such as a wireless fidelity (WiFi) network, a 2nd-generation (2G) or 3rd-generation (3G) network, or a combination thereof. In an exemplary embodiment, the communication component 816 receives a broadcast signal or broadcast associated information from an external broadcast management system through a broadcast channel. In an exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wide band (UWB) technology, a Bluetooth (BT) technology, and other technologies.

In an exemplary embodiment, the electronic device 800 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, and is configured to execute a screen recording method for a multi-screen electronic device in the abovementioned embodiments.

In an exemplary embodiment, there is also provided a non-transitory computer-readable storage medium including instructions, such as included in the memory 804, executable by the processor 820 of the electronic device 800, for performing any image processing method in the abovementioned embodiments. For example, the non-transitory computer-readable storage medium may be a ROM, a random access memory (RAM), a compact disc read-only memory (CD-ROM), a magnetic tape, a floppy disc, an optical data storage device, and the like.

Other implementation solutions of the present disclosure will be apparent to those skilled in the art from consideration of the specification and practice of the present disclosure. This present disclosure is intended to cover, within the scope of the claims, any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope as defined by the appended claims.

**Claims**

1. An image processing method performed on an electronic device executing an operating system, said image processing method comprising the steps of:

   determining (S11) a dirty region of a display region, and calculating a percentage of the dirty region in the display region; wherein the dirty region is a region to be redrawn and refreshed;
   acquiring (S12) first image data of the dirty region in an image frame to be updated for displaying and second image data of the dirty region in a presently displayed image frame, and performing similarity detection on the first image data and the second image data to generate a similarity detection result; and
   determining (S13) whether or not to update the image frame to be updated for displaying to the display region according to the similarity detection result and the percentage of the dirty region in the display region, and if not shielding an updating request for the image frame to be updated for displaying;
   wherein performing the similarity detection on the first image data and the second image data to generate the similarity detection result comprises:

   determining color intensity differences between adjacent pixels in the first image data, assigning binary values to the color intensity differences, the assigned binary values of continuous color intensity differences forming a first binary character string, and determining a first hash value of the first binary character string;
   determining color intensity differences between adjacent pixels in the second image data, assigning binary values to the color intensity differences, the assigned binary values of continuous color intensity differences forming a second binary character string, and determining a second hash value of the second binary character string; and

calculating a Hamming distance between the first hash value and the second hash value, and determining the calculated Hamming distance as a similarity value of the first image data and the second image data to obtain the similarity detection result; further comprising:

> setting a first weight value for the percentage of the dirty region in the display region, and setting a second weight value for the similarity value;
> wherein determining whether to update the image frame to be updated for displaying to the display region comprises:
>
>> calculating a first product value of the first weight value and the percentage of the dirty region in the display region, and calculating a second product value of the second weight value and the similarity value;
>> calculating a sum value of the first product value and the second product value; and
>> comparing the sum value with a set threshold value, in response to the sum value being greater than or equal to the set threshold value, determining to update the image frame to be updated for displaying to the display region, and correspondingly, in response to the sum value being less than the set threshold value, determining not to update the image frame to be updated for displaying to the display region;
>
> wherein shielding the updating request for the image frame to be updated for displaying comprises:
> intercepting, in response to a dynamic adjustment vertical sync (Vsync) signal of the display region being received, the Vsync signal to cause a display component of the operating system not to compose a content of the image frame to be updated for displaying.

2. The image processing method of claim 1, wherein determining the first hash value of the first binary character string comprises:

> performing high-base conversion on the first binary character string to form converted first high-base characters, and sequencing the first high-base characters to form a character string to form a first difference hash value; and
> performing high-base conversion on the second binary character string to form converted second high-base characters, and sequencing the second high-base characters to form a character string to form a second difference hash value.

3. The image processing method of claim 1 or 2, before the color intensity differences between the adjacent pixels in the first image data and the second image data are calculated, further comprising:

> performing compression to change resolutions of the first image data and the second image data to a set resolution; and
> converting color red green blue (RGB) values of the first image data and the second image data with the set resolution to gray values for gray image displaying.

4. An electronic device executing an operating system comprising:

> a first determination unit (41), configured to determine a dirty region of a display region;
> a calculation unit (42), configured to calculate a percentage of the dirty region in the display region; wherein the dirty region is a region to be redrawn and refreshed;
> an acquisition unit (43), configured to acquire first image data of the dirty region in an image frame to be updated for displaying and second image data of the dirty region in a presently displayed image frame;
> a similarity detection unit (44), configured to perform similarity detection on the first image data and the second image data to generate a similarity detection result;
> a second determination unit (45), configured to determine whether or not to update the image frame to be updated for displaying to the display region according to the similarity detection result and the percentage of the dirty region in the display region and, if not, trigger a shielding unit (46); and
> the shielding unit (46), configured to shield an updating request for the image frame to be updated for displaying;
> wherein the similarity detection unit (44) comprises:

a first determination subunit, configured to determine color intensity differences between adjacent pixels in the first image data and color intensity differences between adjacent pixels in the second image data;

an assignment subunit, configured to assign binary values to the color intensity differences, the assigned binary values of continuous color intensity differences forming a first binary character string, and assign binary values to the color intensity differences, the assigned binary values of continuous color intensity differences forming a second binary character string;

a second determination subunit, configured to determine a first hash value of the first binary character string and a second hash value of the second binary character string;

a first calculation subunit, configured to calculate a Hamming distance between the first hash value and the second hash value; and

a similarity detection subunit, configured to determine the calculated Hamming distance as a similarity value of the first image data and the second image data to obtain the similarity detection result;

further comprising:

a setting unit, configured to set a first weight value for the percentage of the dirty region in the display region and set a second weight value for the similarity value;

wherein the second determination unit (45) comprises:

a second calculation subunit, configured to calculate a first product value of the first weight value and the percentage of the dirty region in the display region and calculate a second product value of the second weight value and the similarity value;

a third calculation subunit, configured to calculate a sum value of the first product value and the second product value;

a comparison subunit, configured to compare the sum value with a set threshold value; and

a third determination subunit, configured to, in response to the sum value being greater than or equal to the set threshold value, determine to update the image frame to be updated for displaying to the display region, and correspondingly, in response to the sum value being less than the set threshold value, determine not to update the image frame to be updated for displaying to the display region;

wherein the shielding unit (46) comprises:

a receiving subunit, configured to receive a dynamic adjustment vertical sync (Vsync) signal of the display region; and

an interception subunit, configured to intercept the Vsync signal to cause a display component of the operating system not to compose a content of the image frame to be updated for displaying.

5. The device of claim 4, wherein the second determination subunit is further configured to:

perform high-base conversion on the first binary character string to form converted first high-base characters and sequence the first high-base characters to form a character string to form a first difference hash value; and

perform high-base conversion on the second binary character string to form converted second high-base characters and sequence the second high-base characters to form a character string to form a second difference hash value.

6. The device of claim 4 or 5, further comprising:

a compression unit, configured to perform compression to change resolutions of the first image data and the second image data to a set resolution; and

a conversion unit, configured to convert color red green blue (RGB) values of the first image data and the second image data with the set resolution to gray values for gray image displaying.

7. An electronic device, comprising a processor and a memory configured to store instructions executable by the processor; wherein the processor is configured to call the executable instructions in the memory to execute the image processing method of any one of claims 1 to 3.

8. A computer-readable storage medium comprising instructions to cause a processor of an electronic device to execute the image processing method of any one of claims 1 to 3.

**Patentansprüche**

1. Bildverarbeitungsverfahren, ausgeführt auf einer elektronischen Vorrichtung, welche ein Betriebssystem ausführt, wobei das Bildverarbeitungsverfahren die folgenden Schritte aufweist:

Bestimmen (S11) eines schmutzigen Bereichs eines Displaybereichs, und Berechnen eines prozentualen Anteils des schmutzigen Bereichs in dem Displaybereich; wobei der schmutzige Bereich ein neu zu zeichnender und zu aktualisierender Bereich ist;

Erfassen (S12) erster Bilddaten des schmutzigen Bereichs in einem für die Anzeige zu aktualisierenden Bild und zweiter Bilddaten des schmutzigen Bereichs in einem aktuell angezeigten Bild, und Durchführen einer Ähnlichkeitserkennung mit den ersten Bilddaten und den zweiten Bilddaten, um ein Ähnlichkeitserkennungsergebnis zu erhalten; und

Feststellen (S13), ob das zur Anzeige auf den Displaybereich zu aktualisierende Bild gemäß dem Ähnlichkeitserkennungsergebnis und dem prozentualen Anteil des schmutzigen Bereichs in dem Displaybereich aktualisiert werden soll oder nicht, und falls nicht, Blockieren einer Aktualisierungsanforderung für das zur Anzeige zu aktualisierende Bild;

wobei das Durchführen einer Ähnlichkeitserkennung mit den ersten Bilddaten und den zweiten Bilddaten, um ein Ähnlichkeitserkennungsergebnis zu erhalten, die folgenden Schritte aufweist:

Bestimmen von Farbintensitätsunterschieden zwischen benachbarten Pixeln in den ersten Bilddaten, Zuweisen binärer Werte zu den Farbintensitätsunterschieden, wobei die zugewiesenen binären Werte durchgehender Farbintensitätsunterschiede eine erste Binärzeichenfolge bilden, und Ermitteln eines ersten Hashwerts der ersten Binärzeichenfolge;

Bestimmen von Farbintensitätsunterschieden zwischen benachbarten Pixeln in den zweiten Bilddaten, Zuweisen binärer Werte zu den Farbintensitätsunterschieden, wobei die zugewiesenen binären Werte durchgehender Farbintensitätsunterschiede eine zweite Binärzeichenfolge bilden, und Ermitteln eines zweiten Hashwerts der zweiten Binärzeichenfolge; und

Berechnen eines Hammingabstands zwischen dem ersten Hashwert und dem zweiten Hashwert, und Bestimmen des berechneten Hammingabstands als einen Ähnlichkeitswert der ersten Bilddaten und der zweiten Bilddaten, um das Ähnlichkeitserkennungsergebnis zu erhalten;

ferner mit den Schritten:

Einstellen eines ersten Gewichtswerts für den prozentualen Anteil des schmutzigen Bereichs in dem Displaybereich, und Einstellen eines zweiten Gewichtswerts für den Ähnlichkeitswert;

wobei das Feststellen, ob das zur Anzeige auf dem Displaybereich zu aktualisierende Bild aktualisiert werden soll, die folgenden Schritte aufweist:

Berechnen eines ersten Produktwerts des ersten Gewichtswerts und des prozentualen Anteils des schmutzigen Bereichs in dem Displaybereich, und Berechnen eines zweiten Produktwerts des zweiten Gewichtswerts und des Ähnlichkeitswerts;

Berechnen eines Summenwerts des ersten Produktwerts und des zweiten Produktwerts; und

Vergleichen des Summenwerts mit einem eingestellten Schwellenwert; wenn der Summenwert größer als oder gleich dem eingestellten Schwellenwert ist, Bestimmen, dass das zur Anzeige auf dem Displaybereich zu aktualisierende Bild aktualisiert werden soll, und, entsprechend, wenn der Summenwert geringer als der eingestellte Schwellenwert ist, Bestimmen, dass das zur Anzeige auf dem Displaybereich zu aktualisierende Bild nicht aktualisiert werden soll;

wobei das Blockieren der Aktualisierungsanforderung für das zur Anzeige zu aktualisierende Bild den folgenden Schritt aufweist:

in Reaktion auf den Empfang eines vertikalen Sync-Signals (V-sync) des Displaybereichs zur dynamischen Anpassung, Abfangen des V-sync-Signals, um eine Displaykomponente des Betriebssystems zu veranlassen, keinen Inhalt des zur Anzeige zu aktualisierenden Bilds zu erstellen.

2. Bildverarbeitungsverfahren nach Anspruch 1, bei welchem das Ermitteln des ersten Hashwerts der ersten Binärzeichenfolge die folgenden Schritte aufweist:

> Durchführen einer Hoch-Basis-Umwandlung der ersten Binärzeichenfolge, um umgewandelte erste Hoch-Basis-Zeichen zu bilden, und Sequenzieren der ersten Hoch-Basis-Zeichen zur Bildung einer Zeichenfolge für das Bilden eines ersten Differenz-Hashwerts; und
> Durchführen einer Hoch-Basis-Umwandlung der zweiten Binärzeichenfolge, um umgewandelte zweite Hoch-Basis-Zeichen zu bilden, und Sequenzieren der zweiten Hoch-Basis-Zeichen zur Bildung einer Zeichenfolge für das Bilden eines zweiten Differenz-Hashwerts.

3. Bildverarbeitungsverfahren nach Anspruch 1 oder 2, wobei das Verfahren vor dem Schritt des Berechnens der Farbintensitätsunterschiede zwischen den benachbarten Pixeln in den ersten Bilddaten und den zweiten Bilddaten ferner die folgenden Schritte aufweist:

> Durchführen einer Komprimierung, um Auflösungen der ersten Bilddaten und der zweiten Bilddaten zu einer voreingestellten Auflösung zu ändern; und
> Umwandeln von Rot-Grün-Blau-Farbwerten (RGB) der ersten Bilddaten und der zweiten Bilddaten mit der voreingestellten Auflösung in Grauwerte zur Graubild-Anzeige.

4. Elektronische Vorrichtung, welche ein Betriebssystem ausführt, mit:

> einer ersten Bestimmungseinheit (41), die zum Bestimmen eines schmutzigen Bereichs eines Displaybereichs, und zum Berechnen eines prozentualen Anteils des schmutzigen Bereichs in dem Displaybereich ausgebildet ist; wobei der schmutzige Bereich ein neu zu zeichnender und zu aktualisierender Bereich ist;
> einer Erfassungseinheit (43), die zum Erfassen erster Bilddaten des schmutzigen Bereichs in einem für die Anzeige zu aktualisierenden Bild und zweiter Bilddaten des schmutzigen Bereichs in einem aktuell angezeigten Bild ausgebildet ist;
> einer Ähnlichkeitserkennungseinheit (44), die zum Durchführen einer Ähnlichkeitserkennung mit den ersten Bilddaten und den zweiten Bilddaten ausgebildet ist, um ein Ähnlichkeitserkennungsergebnis zu erhalten;
> einer zweiten Bestimmungseinheit (44), die dazu ausgebildet ist, festzustellen, ob das zur Anzeige auf den Displaybereich zu aktualisierende Bild gemäß dem Ähnlichkeitserkennungsergebnis und dem prozentualen Anteil des schmutzigen Bereichs in dem Displaybereich aktualisiert werden soll oder nicht, und falls nicht, eine Abschirmeinheit (46) zu triggern; und
wobei die Abschirmeinheit (46) zum Blockieren einer Aktualisierungsanforderung für das zur Anzeige zu aktualisierende Bild ausgebildet ist;
wobei die Ähnlichkeitserkennungseinheit (44) aufweist:

> eine erste Bestimmungsuntereinheit, die zum Bestimmen von Farbintensitätsunterschieden zwischen benachbarten Pixeln in den ersten Bilddaten und von Farbintensitätsunterschieden zwischen benachbarten Pixeln in den zweiten Bilddaten ausgebildet ist;
> eine Zuweisungsuntereinheit, die dazu ausgebildet ist, den Farbintensitätsunterschieden binäre Werte zuzuweisen, wobei die zugewiesenen binären Werte durchgehender Farbintensitätsunterschiede eine erste Binärzeichenfolge bilden, und den Farbintensitätsunterschieden binäre Werte zuzuweisen, wobei die zugewiesenen binären Werte durchgehender Farbintensitätsunterschiede eine zweite Binärzeichenfolge bilden;
> eine zweite Bestimmungsuntereinheit, die zum Ermitteln eines ersten Hashwerts der ersten Binärzeichenfolge und eines zweiten Hashwerts der zweiten Binärzeichenfolge ausgebildet ist;
> eine erste Berechnungsuntereinheit, die zum Berechnen eines Hammingabstands zwischen dem ersten Hashwert und dem zweiten Hashwert ausgebildet ist; und
> eine Ähnlichkeitserkennungsuntereinheit, die zum Bestimmen des berechneten Hammingabstands als einen Ähnlichkeitswert der ersten Bilddaten und der zweiten Bilddaten ausgebildet ist, um das Ähnlichkeitserkennungsergebnis zu erhalten;
> ferner mit:

>> einer Einstelleinheit, die zum Einstellen eines ersten Gewichtswerts für den prozentualen Anteil des schmutzigen Bereichs in dem Displaybereich, und zum Einstellen eines zweiten Gewichtswerts für den Ähnlichkeitswert ausgebildet ist;
>> wobei die zweite Bestimmungseinheit (45) aufweist:

>>> eine zweite Berechnungsuntereinheit, die zum Berechnen eines ersten Produktwerts des ersten Gewichtswerts und des prozentualen Anteils des schmutzigen Bereichs in dem Displaybereich, und zum Berechnen eines zweiten Produktwerts des zweiten Gewichtswerts und des Ähnlichkeitswerts ausgebildet ist;

eine dritte Berechnungsuntereinheit, die zum Berechnen eines Summenwerst des ersten Produktwerts und des zweiten Produktwerts ausgebildet ist;

eine Vergleichsuntereinheit, die zum Vergleichen des Summenwerts mit einem eingestellten Schwellenwert ausgebildet ist;

eine dritte Bestimmungsuntereinheit, die dazu ausgebildet ist, wenn der Summenwert größer als oder gleich dem eingestellten Schwellenwert ist, zu bestimmen, dass das zur Anzeige auf dem Displaybereich zu aktualisierende Bild aktualisiert werden soll, und, entsprechend, wenn der Summenwert geringer als der eingestellte Schwellenwert ist, zu bestimmen, dass das zur Anzeige auf dem Displaybereich zu aktualisierende Bild nicht aktualisiert werden soll;

wobei die Abschirmeinheit (46) aufweist:

eine Empfangsuntereinheit, die dazu ausgebildet ist, ein vertikales Sync-Signals (V-sync) des Displaybereichs zur dynamischen Anpassung zu empfangen; und

eine Abfanguntereinheit, die zum Abfangen des V-sync-Signals ausgebildet ist, um eine Displaykomponente des Betriebssystems zu veranlassen, keinen Inhalt des zur Anzeige zu aktualisierenden Bilds zu erstellen.

5. Vorrichtung nach Anspruch 4, bei welcher die zweite Bestimmunguntereinheit ferner dazu ausgebildet ist,

eine Hoch-Basis-Umwandlung der ersten Binärzeichenfolge, um umgewandelte erste Hoch-Basis-Zeichen zu bilden, und ein Sequenzieren der ersten Hoch-Basis-Zeichen zur Bildung einer Zeichenfolge für das Bilden eines ersten Differenz-Hashwerts durchzuführen; und eine Hoch-Basis-Umwandlung der zweiten Binärzeichenfolge, um umgewandelte zweite Hoch-Basis-Zeichen zu bilden, und ein Sequenzieren der zweiten Hoch-Basis-Zeichen zur Bildung einer Zeichenfolge für das Bilden eines zweiten Differenz-Hashwerts durchzuführen.

6. Vorrichtung nach Anspruch 4 oder 5, ferner mit:

einer Komprimierungseinheit, die zum Durchführen einer Komprimierung ausgebildet ist, um Auflösungen der ersten Bilddaten und der zweiten Bilddaten zu einer voreingestellten Auflösung zu ändern; und

einer Umwandlungseinheit, die zum Umwandeln von Rot-Grün-Blau-Farbwerten (RGB) der ersten Bilddaten und der zweiten Bilddaten mit der voreingestellten Auflösung in Grauwerte zur Graubild-Anzeige ausgebildet ist.

7. Elektronische Vorrichtung mit einem Prozessor und einem Speicher, der dazu ausgebildet ist, von dem Prozessor ausführbare Befehle zu speichern, wobei der Prozessor dazu ausgebildet ist, die ausführbaren Befehle in dem Speicher abzurufen, um das Bildverarbeitungsverfahren nach einem der Ansprüche 1 bis 3 auszuführen.

8. Computerlesbares Speichermedium mit Befehlen, die einen Prozessor einer elektronischen Vorrichtung veranlassen, das Bildverarbeitungsverfahren nach einem der Ansprüche 1 bis 3 auszuführen.

**Revendications**

1. Procédé de traitement d'image effectué sur un dispositif électronique exécutant un système d'exploitation, ledit procédé de traitement d'image comprenant les étapes consistant à :

déterminer (S11) une zone sale d'une zone d'affichage, et calculer un pourcentage de la zone sale dans la zone d'affichage ; dans lequel la zone sale est une zone à redessiner et à rafraîchir ;

acquérir (S12) des premières données d'image de la zone sale dans une trame d'image à mettre à jour pour l'affichage et de secondes données d'image de la zone sale dans une trame d'image actuellement affichée, et effectuer une détection de similarité sur les premières données d'image et les secondes données d'image afin de générer un résultat de détection de similarité ; et déterminer (S13) s'il faut mettre à jour la trame d'image à mettre à jour pour l'affichage dans la zone d'affichage en fonction du résultat de détection de similarité et du pourcentage de la zone sale dans la zone d'affichage, et sinon, blinder une demande de mise à jour de la trame d'image à mettre à jour pour l'affichage ;
dans lequel la détection de similarité sur les premières données d'image et les secondes données d'image afin de générer le résultat de détection de similarité comprend :

la détermination des différences d'intensité de la couleur entre les pixels adjacents dans les premières données d'image, l'attribution des valeurs binaires aux différences d'intensité de la couleur, les valeurs binaires attribuées des différences continues d'intensité de la couleur formant une première chaîne de caractères binaires, et la détermination d'une première valeur de hachage de la première chaîne de caractères binaires ;
la détermination des différences d'intensité de la couleur entre les pixels adjacents dans les secondes données d'image, l'attribution des valeurs binaires aux différences d'intensité de la couleur, les valeurs binaires attribuées des différences continues d'intensité de la couleur formant une seconde chaîne de caractères binaires, et la détermination d'une seconde valeur de hachage de la seconde chaîne de caractères binaires ; et
le calcul d'une distance de Hamming entre la première valeur de hachage et la seconde valeur de hachage, et la détermination de la distance de Hamming calculée comme valeur de similarité entre les premières données d'image et les secondes données d'image afin d'obtenir le résultat de détection de similarité ;
comprenant en outre :

la définition d'une première valeur de poids pour le pourcentage de la zone sale dans la zone d'affichage, et la définition d'une seconde valeur de poids pour la valeur de similarité ;
dans lequel la détermination du fait de savoir s'il faut mettre à jour la trame d'image à mettre à jour pour l'affichage dans la zone d'affichage comprend :

le calcul d'une première valeur de produit de la première valeur de poids et du pourcentage de la zone sale dans la zone d'affichage, et le calcul d'une seconde valeur de produit de la seconde valeur de poids et de la valeur de similarité ;
le calcul d'une valeur de somme de la première valeur de produit et de la seconde valeur de produit ; et la comparaison de la valeur de somme avec une valeur seuil définie, en réponse à la valeur de somme supérieure ou égale à la valeur seuil définie, la détermination de mettre à jour la trame d'image à mettre à jour pour l'affichage dans la zone d'affichage, et de manière correspondante, en réponse à la valeur de somme inférieure à la valeur seuil définie, la détermination de ne pas mettre à jour la trame d'image à mettre à jour pour l'affichage dans la zone d'affichage ;
dans lequel le blindage de la demande de mise à jour de la trame d'image à mettre à jour pour l'affichage comprend :

l'interception, en réponse à la réception d'un signal de synchronisation verticale (Vsync) d'ajustement dynamique de la zone d'affichage, du signal Vsync pour faire en sorte qu'un composant d'affichage du système d'exploitation ne compose pas un contenu de la trame d'image à mettre à jour pour l'affichage.

2. Procédé de traitement d'image selon la revendication 1, dans lequel la détermination de la première valeur de hachage de la première chaîne de caractères binaires comprend :

le fait d'effectuer une conversion à base élevée sur la première chaîne de caractères binaires afin de former de premiers caractères à base élevée convertis, et le séquençage des premiers caractères à base élevée afin de former une chaîne de caractères de manière à former une première valeur de hachage de différence ; et
le fait d'effectuer une conversion à base élevée sur la seconde chaîne de caractères binaires afin de former de seconds caractères à base élevée convertis, et le séquençage les seconds caractères à base élevée afin de former une chaîne de caractères de manière à former une seconde valeur de hachage de différence.

3. Procédé de traitement d'image selon la revendication 1 ou 2, avant que les différences d'intensité de la couleur entre les pixels adjacents dans les premières données d'image et les secondes données d'image ne soient calculées, comprenant en outre :

le fait d'effectuer une compression afin de changer les résolutions de premières données d'image et de secondes données d'image à une résolution définie ; et

la conversion des valeurs de couleur rouge, vert et bleu (RVB) de premières données d'image et de secondes données d'image avec la résolution définie en valeurs de gris pour l'affichage d'images grises.

4. Dispositif électronique exécutant un système d'exploitation comprenant :

une première unité de détermination (41), configurée pour déterminer une zone sale d'une zone d'affichage ;
une unité de calcul (42), configurée pour calculer un pourcentage de la zone sale dans la zone d'affichage ; dans lequel la zone sale est une zone à redessiner et à rafraîchir ;
une unité d'acquisition (43), configurée pour acquérir les premières données d'image de la zone sale dans une trame d'image à mettre à jour pour l'affichage et les secondes données d'image de la zone sale dans une trame d'image actuellement affichée ;
une unité de détection de similarité (44), configurée pour effectuer une détection de similarité sur les premières données d'image et les secondes données d'image afin de générer un résultat de détection de similarité ;
une seconde unité de détermination (45), configurée pour déterminer s'il faut mettre à jour la trame d'image à mettre à jour pour l'affichage dans la zone d'affichage en fonction du résultat de détection de similarité et du pourcentage de la zone sale dans la zone d'affichage et, et dans la négative, déclencher
une unité de blindage (46) ; et
l'unité de blindage (46), configurée pour blinder une demande de mise à jour de la trame d'image à mettre à jour pour l'affichage ;
dans lequel l'unité de détection de similarité (44) comprend :

une première sous-unité de détermination, configurée pour déterminer les différences d'intensité de la couleur entre les pixels adjacents dans les premières données d'image et les différences d'intensité de la couleur entre les pixels adjacents dans les secondes données d'image ;
une sous-unité d'attribution, configurée pour attribuer des valeurs binaires aux différences d'intensité de la couleur, les valeurs binaires attribuées des différences continues d'intensité de la couleur formant une première chaîne de caractères binaires, et pour attribuer des valeurs binaires aux différences d'intensité de couleur, les valeurs binaires attribuées des différences d'intensité de couleur continues formant une seconde chaîne de caractères binaires ;
une deuxième sous-unité de détermination, configurée pour déterminer une première valeur de hachage de la première chaîne de caractères binaires et une seconde valeur de hachage de la seconde chaîne de caractères binaires ;
une première sous-unité de calcul, configurée pour calculer une distance de Hamming entre la première valeur de hachage et la seconde valeur de hachage ; et
une sous-unité de détection de similarité, configurée pour déterminer la distance de Hamming calculée comme valeur de similarité entre les premières données d'image et les secondes données d'image afin d'obtenir le résultat de détection de similarité ;
comprenant en outre :

une unité de définition, configurée pour définir une première valeur de poids pour le pourcentage de la zone sale dans la zone d'affichage et définir une seconde valeur de poids pour la valeur de similarité ;
dans lequel la seconde unité de détermination (45) comprend :

une deuxième sous-unité de calcul, configurée pour calculer une première valeur de produit de la première valeur de poids et du pourcentage de la zone sale dans la zone d'affichage et calculer une seconde valeur de produit de la seconde valeur de poids et de la valeur de similarité ;
une troisième sous-unité de calcul, configurée pour calculer une valeur de somme de la première valeur de produit et de la seconde valeur de produit ;
une sous-unité de comparaison, configurée pour comparer la valeur de somme avec une valeur seuil définie ; et une troisième sous-unité de détermination, configurée pour, en réponse à la valeur de somme supérieure ou égale à la valeur seuil définie, déterminer de mettre à jour la trame d'image à mettre à jour pour l'affichage dans la zone d'affichage, et de manière correspondante, en réponse à la valeur de somme inférieure à la valeur seuil définie, déterminer de ne pas mettre à jour la trame d'image à mettre à jour pour l'affichage dans la zone d'affichage ;
dans lequel l'unité de blindage (46) comprend :

> une sous-unité de réception, configurée pour recevoir un signal de synchronisation verticale (Vsync) d'ajustement dynamique de la zone d'affichage ; et
> une sous-unité d'interception, configurée pour intercepter le signal Vsync de sorte qu'un composant d'affichage du système d'exploitation ne compose pas un contenu de la trame d'image à mettre à jour pour l'affichage.

5. Dispositif selon la revendication 4, dans lequel la deuxième sous-unité de détermination est en outre configurée pour :

> effectuer une conversion à base élevée sur la première chaîne de caractères binaires afin de former de premiers caractères à base élevée convertis et séquencer les premiers caractères à base élevée afin de former une chaîne de caractères de manière à former une première valeur de hachage de différence ; et
> effectuer une conversion à base élevée sur la seconde chaîne de caractères binaires afin de former de seconds caractères à base élevée convertis et séquencer les seconds caractères à base élevée afin de former une chaîne de caractères de manière à former une seconde valeur de hachage de différence.

6. Dispositif selon la revendication 4 ou 5, comprenant en outre :

> une unité de compression, configurée pour effectuer une compression afin de changer les résolutions de premières données d'image et de secondes données d'image à une résolution définie ; et
> une unité de conversion, configurée pour convertir les valeurs de couleur rouge, vert et bleu (RVB) de premières données d'image et de secondes données d'image avec la résolution définie en valeurs de gris pour l'affichage d'images grises.

7. Dispositif électronique, comprenant un processeur et une mémoire configurée pour stocker des instructions exécutables par le processeur ; dans lequel le processeur est configuré pour appeler les instructions exécutables dans la mémoire afin d'exécuter le procédé de traitement d'image selon l'une quelconque des revendications 1 à 3.

8. Support de stockage lisible par ordinateur comprenant des instructions permet d'amener le processeur d'un dispositif électronique à exécuter le procédé de traitement d'image selon l'une quelconque des revendications 1 à 3.

A dirty region of a display region is determined, and a percentage of the dirty region in the display region is calculated                                    S11

First image data of the dirty region in an image frame to be updated for displaying and second image data of the dirty region in a presently displayed image frame are acquired, and similarity detection is performed on the first image data and the second image data to generate a similarity detection result                                    S12

Whether to update the image frame to be updated for displaying to the display region is determined according to the similarity detection result and the percentage of the dirty region in the display region, and if NO, an updating request for the image frame to be updated for displaying is shielded                                    S13

# FIG. 1

S21

A dirty region of a display region is determined

S22

First image data of the dirty region in an image frame to be updated for displaying and second image data of the dirty region in a presently displayed image frame are acquired, and similarity detection is performed on the first image data and the second image data to generate a similarity detection result

S23

Whether to update the image frame to be updated for displaying to the display region is determined according to the similarity detection result, and if NO, an updating request for the image frame to be updated for displaying is shielded

**FIG. 2**

| A percentage p of a dirty region in a whole display region is calculated | S31 |

| dHash values of the dirty regions in two image frames are calculated respectively | S32 |

| A Hamming distance between the two image frames is calculated based on a dHash algorithm, and a similarity value s is further obtained based on a magnitude of the Hamming distance | S33 |

| A similarity between image data of the dirty regions in the previous and next image frames is calculated according to the abovementioned similarity algorithm at an interval of a period T | S34 |

**FIG. 3**

Image processing device

First determination unit 41

Calculation unit 42

Acquisition unit 43

Similarity detection unit 44

Second determination unit 45

Shielding unit 46

**FIG. 4**

Image processing device

First determination unit 51

Acquisition unit 52

Similarity detection unit 53

Second determination unit 54

Shielding unit 55

**FIG. 5**

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018108311 A1
- US 2017365236 A1

- CN 109005457 A1